# EUROPEAN PATENT APPLICATION

(11) **EP 1 455 004 A1**
(43) Date of publication of application: **08.09.2004**
(21) Application number: 04001184.3
(22) Date of filing: 21.01.2004
(51) Int. Cl.: C25B 1/24, C25B 15/02, C25C 7/00, C25B 9/00

(54) **Electrolytic apparatus for molten salt**

(30) Priority: 22.01.2003 JP 2003013778
(71) Applicant: TOYO TANSO CO., LTD., Osaka-shi, Osaka 555-0011 (JP)
(72) Inventor: Hiraiwa, Jiro, c/o Toyo Tanso Co., Ltd., Osaka-shi Osaka 555-0011 (JP); Yoshimoto, Osamu, c/o Toyo Tanso Co., Ltd., Osaka-shi Osaka 555-0011 (JP); Tojo, Tetsuro, c/o Toyo Tanso Co., Ltd., Osaka-shi Osaka 555-0011 (JP)
(74) Representative: Leson, Thomas Johannes Alois, Dipl.-Ing.

(57) **Abstract**

The present invention relates to an electrolytic apparatus for molten salt having an electrolytic cell to electrolyze an electrolytic bath consists of a mixed molten salt comprises a first heat exchanging means (51) to heat and/or cool the electrolytic cell body, and an outer frame (54) disposed outside of the first heat exchanging means with space and to seal the first exchanging means, and a heat insulating zone capable of decompression or vacuum formed inside the outer flame. Further, an electric insulating material and a gas sealing material which are placed in the electrolytic cell required the electric insulating and the gas sealing simultaneously.

## Description

### BACKGROUND OF THE INVENTION

### Field of the Invention

The present invention relates to an electrolytic apparatus for molten salt, more particularly to an electrolytic apparatus for molten salt, which can be compact, and with excellent sealing property.

### Description of the Related Art

Fluorine gas is an indispensable basic gas in semiconductor manufacturing field for example. Further, in case, fluorine gas is used for semiconductor manufacturing field independently, but nitrogen trifluoride gas (hereinafter referred to as NF₃ gas) which is synthesized by based on fluorine gas, and the demand for cleaning gas and dry etching gas to be used in semiconductor industry is rapidly, increased. Also, neon fluoride gas (hereinafter referred to as NeF gas) and krypton fluoride gas (hereinafter referred to as KrF gas) or the like are excimer laser oscillator gases, which are used for the patterning process for producing the semiconductor integrated circuit, and the mixture gas of rare gas and fluorine gas is widely used.

Fluorine gas and NF 3 gas which used for manufacturing semiconductor are required high purity with least impurities. Also, required amount of fluorine gas filled up in the gas cylinder is taken out and used for in the semiconductor manufacturing site. Accordingly, the management of storage places of the gas cylinder, security of the gas and purity maintenance or the like is very important.

Furthermore, as the demand of NF₃ gas is getting increasing rapidly recently, there are problems like supply storage, and a problem that it is impossible to use the other fluorides in view of global warming and ozone hole. A fluorine gas is getting more widely used to many applications, as alternatives for fluorides the fluorides things substitution. In view of these problems, fluorine gas generator on demand is preferable than to treat the high pressure fluorine gas stuffed in the cylinder in view of improvement security and convenience for degree of freedom of gas supply.

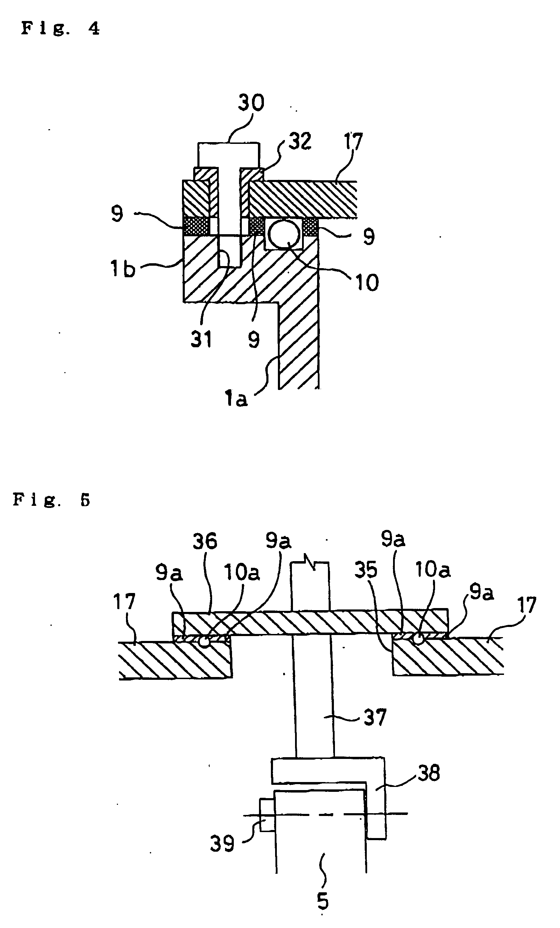

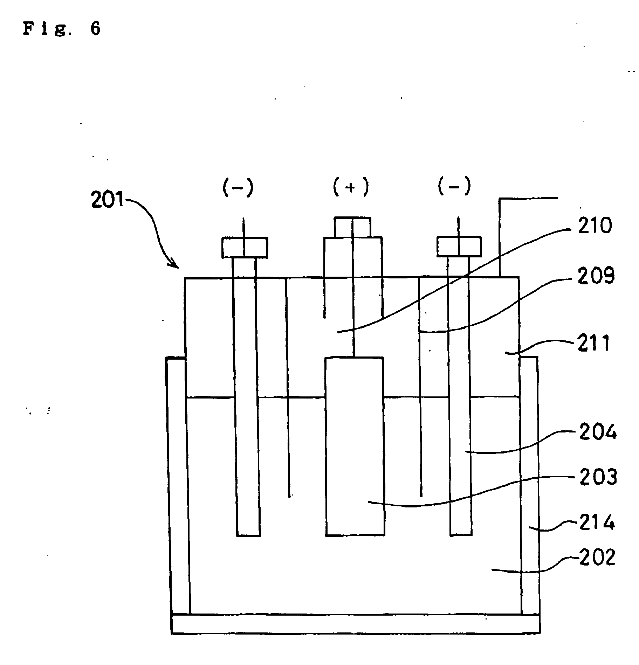

Conventionally, fluorine gas is generated by electrolytic cell as shown in Fig.6. As the material of main part of the electrolytic cell 201, nickel (hereinafter referred to as Ni), Monel, carbon steel or the like is generally used. A heater and / or a cooling device 214 is disposed surrounding of the electrolytic cell body 201 to maintain the temperature of the electrolytic bath 202 constant and to be capable to electrolysis. Also, electrolytic cell body 201 is divided into an anode chamber 210 and a cathode chamber 211 by partition wall 209 made of Monel or the like. The fluorine gas is generated by electrolyzing the electrolytic bath 202, in which an electric voltage as applied between the anode 203 made of carbon or nickel disposed in this anode chamber 210 and the cathode 204 consists of iron or nickel disposed in the cathode chamber 211.

However, as in case of disposing the fluorine gas generator in the semiconductor manufacturing plants, there are many restrictions for installation conditions, it is very important to make the gas generator compact. To make the electrolytic apparatus compact, it is necessary to consider rearrangement of heat exchanger parts which keep the temperature to operate electrolytic apparatus.

Usually, the temperature of the electrolytic bath in the electrolytic cell is being kept constant by heating apparatus such as heater or the like which is disposed around the electrolytic cell to control the electrolyzing condition by maintaining temperature of the electrolytic bath in the gas generator. Also, preventing the rapid temperature change in the electrolytic cell by using heat insulator disposed around the electrolytic cell (including heater) is necessary to improve energy efficiency and to prevent the burning of operators due to rapid temperature rise. Generally, asbestos, urethane or the like is used for heat insulator, the insulating performance is not only inadequate, but also there has a problem of working environment such as a scattering of the particles or the like which are formed of fibers or coarse particles.

Also, according to conventional industrial electrolytic cell, sealing material such as shape packing is used for the gas generating parts in electrolytic cell and being protected from the invasion of an atmospheric gas such as air or the like outside of the electrolytic cell into the inside of the electrolytic cell or the leakage of the gas such as fluorine or hydrogen in the electrolytic cell. However, the airtightness of the electrolytic cell was inadequate, even if shaped packings are used. Also, electric insulation of connection between electrodes for electrolyzing and terminal was not enough.

Accordingly, the purpose of the present invention is to provide an electrolytic apparatus for molten salt which can be compact. Also, the purpose of the present invention is to provide an excellent electrolytic apparatus for molten salt having an electric insulation, gas sealing and security against heat and generated gas.

### SUMMARY OF THE INVENTION

The present inventors have been considered compact of electrolytic cell body, heat insulation structure such as heat exchanger parts, improvement of electric insulation, gas leakage and work safety, and accomplished the present invention.

Namely, the present invention relates to an electrolytic apparatus for molten salt having an electrolytic cell to electrolyze an electrolytic bath consists of a mixed molten salt comprises a first heat exchanging means to heat and/or cool the electrolytic cell body, and an outer flame disposed outside of the first heat exchanging means with space and to seal the first exchanging means, and a heat insulating zone capable of decompression or vacuum formed inside the outer flame. According to the present invention, since the electrolytic cell has a decompression or vacuum heat insulation structure, coefficient of thermal conductivity can be extremely low compared with the heat insulator such as asbestos or urethane. As the result, thickness of the heat insulating zone can be thin. Therefore, electrolytic cell can be compact and working safety is improved. Further, a heat energy loss to heat electrolytic cell body can be decreased. Also, there are no particles. In addition, in this invention, heat exchanging means heating and/or cooling the both of the electrolytic cell body. As the result, the efficiency of heat exchanging can be improved by combination of heating and cooling of electrolytic cell with first heat exchanging means. Further, target pressure by decompression or vacuum, approximately 10kPa·1000 Pa is preferable. When the pressure of heat insulating zone is less than 10kPa, the thermal conductivity by gases cannot be lowered, as the result, efficiency of the heat insulation drops. Also, to make the pressure of heat insulating zone less than 100Pa, another large equipment is required, resulting in high cost. Accordingly, to decompress the pressure of heat insulating zone between 10kPa and 1kPa is preferable.

Also, the present invention relates to the electrolytic apparatus for molten salt, wherein the electrolytic apparatus may further comprises a second heat exchanging means to heat the electrolytic cell body. The second heat exchanging means according to the present invention is provided in case that it is hard to heat only with the first exchanging means, or in case that further precise temperature controlling is required, like heating, cooling or to capable to change, such as heating parts disposed on the bottom of electrolytic cell body, a heater disposed on the pipe for supplying the HF can be shown in for example.

Further, the present invention relates to the electrolytic apparatus having the electrolytic cell body for electrolyzing the electrolytic bath consisting of the mixed molten salt, the electrolytic apparatus comprises the first heat exchanging means to heat and/or cool the electrolytic cell body, and a part which is required electrolytic insulating material and gas sealing material simultaneously. An electrolytic insulating material described in the present invention is defined as a material such as volume specific resistance value which is not less than 10⁶ Ω·m measured by JIS K 6911. Also, as an electric insulating material, having a corrosion resistance characteristic against generated fluorine gas is preferable, fluoride rubbers, fluorocarbon resin like polytetrafluoroethylene (hereinafter referred to as PTFE), PFA (tetrafluoroethylene-perfluoro (alkyl vinyl ether) copolymer) is shown as example. By inserting the electric insulating material between electrolytic cell body and upper lid, the electric insulating property is improved. Also, as gas sealing material having a corrosion resistance material against the generated fluorine gas or the generated HF gas in addition to electric insulation. Furthermore a material should have an airtightness and an elasticity is more preferable, such as fluorinated rubber, for example. The gas sealing material should preferably be disposed where hardly attack such material fluorine gas, HF gas or the like. Also, the gas sealing property is defined as a degree of pressure change after temperature compensation is within ± 1 %, when the gas pressure of 1.1times or more than usual operating pressure within nitrogen gas atmosphere and keeps for 24hours in the electrolytic apparatus. By this construction, outside gas of the electrolytic cell invasion is controlled, as the result, generated gas purity can be improved. Also, the generated gas by electrolyzing the electrolytic cell, it cannot easily leak out from electrolytic apparatus, as the result, an improvement of working environment and security can be improved.

Furthermore, the present invention relates to an electrolytic apparatus for molten salt comprises an electrolytic cell to electrolyze the electrolytic bath consists of a mixed molten salt, wherein the electrolytic apparatus having the electric insulating material and the gas sealing material, in case of the electric insulating property and gas sealing property are required in the electrolytic cell simultaneously. By this construction, the electric insulating effect, airtightness, the purity of the generated gas and security can further be improved.

Also, the present invention relates to the electrolytic apparatus for molten salt comprises a flow line to flow a heat exchanging medium in the first heat exchanging means surrounding the electrolytic cell body. By this construction, by circulating the heat exchanging medium, heating and/or cooling the electrolytic cell is casily and effectively. As the result, melting of salt used as the raw material of electrolytic bath and removal of generating heat by electrolyzing can be carried out effectively.

Further, the present invention relates to the electrolytic apparatus for molten salt, wherein the heat exchanging medium is a fluid consisted of high electric insulating material. By this construction, short-circuiting from heat medium can be prevented, when the electrolytic cell body becomes cathode. As an electric insulating material, liquid such as water (pure water or distilled water) fluorinated oil, silicone oil or gas such as Ar gas, He gas is shown for example, but it is not limited to these materials. In addition, to consider easy access, using water is preferable and pure water is more preferable.

Also, the present invention relates to the electrolytic apparatus for molten salt, wherein the electrolytic cell is disposed in the box whose upper part is open. The purpose of adopting such box is to separate the electrolytic cell from outside of the electrolytic cell. The box material is not limited, but it is necessary to have the corrosion resistance and heat resistance against the generated gas by generating and electrolytic bath component, metal such as a stainless, PTFE, is shown as example. Also, as for the place to dispose the box, in order to prevent the leak of electrolyte, disposing to box the bottom of the electrolytic cell is preferable.

Further, the present invention relates to the electrolytic apparatus, wherein a mixed molten salt comprise a hydrogen fluoride.

According to the present invention, as the effect of insulation is improved by forming the heat insulating zone being capable to decompression or vacuum, it is possible to make the apparatus more compact than the electrolytic apparatus having a conventional insulating material. Accordingly, the heat discharge to the outside can be dropped, and the electrolytic cell is heated effectively, as the result, the waste of energy can be minimized by heat exchanging means. Also, as the heat insulating zone is decompression or vacuum, scattering of the particles which is one of the deteriorating factor from heat insulating zone can be prevented in the semiconductor manufacturing process. Further, by means of consideration gas sealing material, electric insulating material and gas sealing property are improved and the high purity gas can be obtained, furthermore the gas leakage is prevented, as the result, it is possible to use the apparatus at semiconductor manufacturing site.

### BRIEF DESCRIPTION OF THE DRAWINGS

Fig.1 is an outer elevational, partially cross-sectional view of the principal part of the fluorine gas generator relating to the present invention.
Fig.2 is a perspective view of the electrolytic cell showing the internal structure of the outer flame, according to the present invention.
Fig.3 is a cross sectional view of the electrolytic cell body according to the present invention.
Fig.4 is an expanded cross sectional view of part A shown in Fig.3.
Fig.5 is an expanded cross sectional view of part B shown in Fig.3.
Fig.6 is a schematic cross sectional view of the fluorine gas generator which was being used conventionally.

### DETAILED DESCRIPTION OF THE PREFERRED EMBODIMENTS

Hereinafter, based on the drawings 1 - 5, preferred embodiments of the present invention relating to the fluorine gas generator are described more in detail.

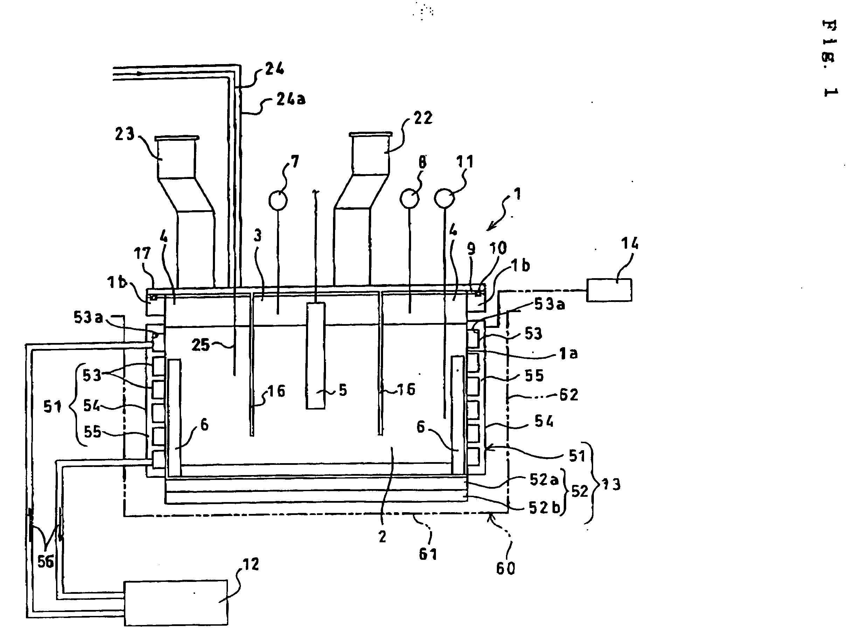

The construction of fluorine gas generator (an electrolytic apparatus for molten salt) is shown in Fig.1, and 1 is an electrolytic cell consisted of electrolytic cell body 1a and upper lid 17, and 2 is an electrolytic bath consists of mixed of molten salt made of KF-2HF type, 3 is an anode chamber, 4 is a cathode chamber, 5 is an anode, 6 is a cathode. 22 is an outlet port for generated fluorine gas in anode chamber 3. 11 is a thermometer to measure the temperature in the electrolytic bath 2, 13 is a heat exchanging means of electrolytic cell 1, 12 is an apparatus for warm water heating to supply the warm water for heat exchanging means 13. 51 is a warm water jacket disposed on the side of electrolytic cell 1, which constructs heat exchanging means, 52 is a heating parts (secondary heat exchanging means), which constructs heat exchanging means 13 and disposed outside of the bottom of electrolytic cell 1.

The electrolytic cell 1 is made of a metal such as Ni, Monel, pure iron or stainless steel. Inside of the electrolytic cell 1, separator 16 made of Ni or Monel divides into the anode chamber 3 and the cathode chamber 4 in the center of the electrolytic cell 1. An anode 5 is disposed in the anode chamber 3, and a cathode 6 is disposed in the cathode chamber 4. As an anode 5, low polarized carbon electrode is preferable. Also, as the cathode 6 preferably consists of Ni machined into predetermined shape.

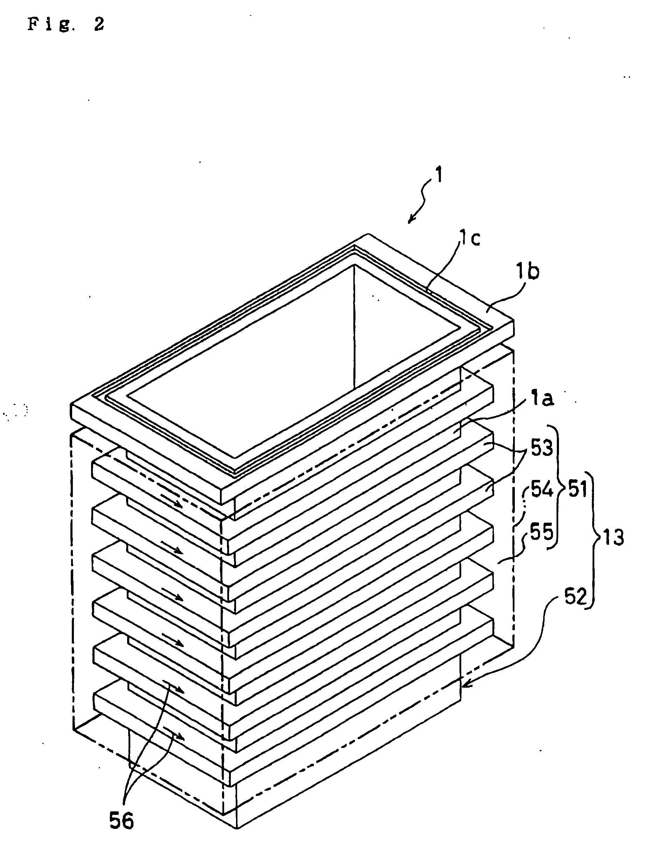

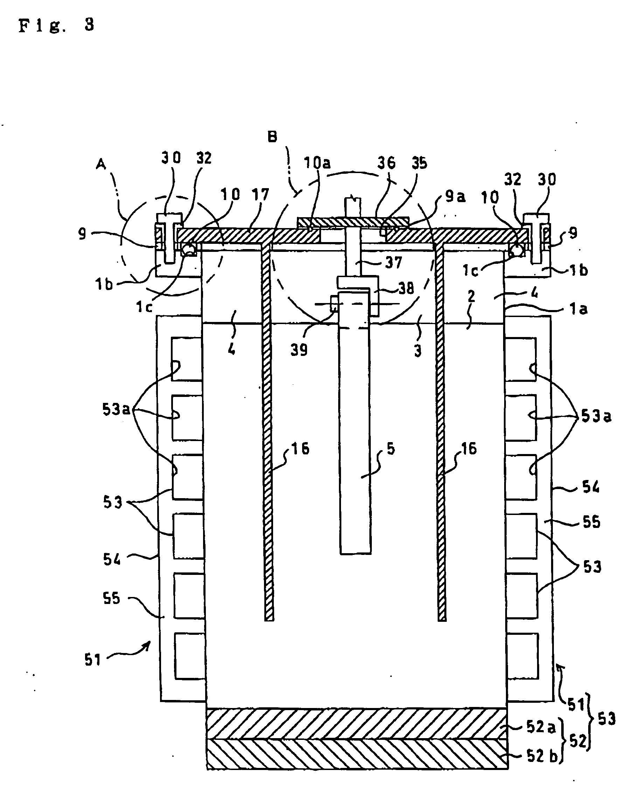

A flange part 1b connected to a circumferential edge of the upper lid 17 is formed on the upper circumference of the electrolytic cell body 1a, A concave groove 1c shown in Fig.2 and Fig.3 surrounds the plane of the flange part 1b side, which is connected to upper lid 17.

The upper lid 17 shown in Fig.3 and Fig.4 is placed and fixed to the screw part 31 to the flange part 1b by bolt 30 and a electric insulating bushing 32 is placed between bolt 30 and upper lid 17. Since the upper lid 17 and electrolytic cell body 1a are connected by bolt 30 at a squeezing strength of 5 - 30 N·m with the electric insulating material 32, placed there between (the upper lid 17) is insulated electrically without hurting an insulation resin. Also, electric insulating material 9 and gas sealing material 10 are placed between flange part 1b and circumferential edge of upper lid 17. As this gas sealing material 10, O ring made of fluorinated rubber having a corrosion resistance against the fluorine gas is used for and disposed in the groove 1c of flange 1b. In addition, on the plane of upper lid 17 of flange part 1b, plurality of screw parts 31 are formed at predetermined interval and upper lid 17 is fixed to flange part 1b with same number of bolts 30.

Also, electric insulating material 9 (wherein right and left both sides in Fig.3), which is disposed surrounding the inside and the outside of gas sealing material 10, and is disposed along the interstice between flange 1b and upper lid 17. As this electric insulating material 9, polytetrafluoroethylene (PTFE) or the like can be used.

By placing the electric insulating material 9 and gas sealing material 10 between upper lid 17 and electrolytic cell body 1a, upper lid 17 can be easily removed from the electrolytic cell body 1a. Also, by placing the gas sealing material 10 between electrolytic cell body 1a and upper lid 17, fluorine gas, hydrogen gas and HF gas or the like cannot leak out of electrolytic cell 1, and a gas outside cannot invade into the electrolytic cell 1. Further, the short-circuiting between upper lid 17 and electrolytic cell body 1a is prevented by electrical insulation such as an electric insulating material 9.

As shown in Fig. 1, an outlet port 22 for generated fluorine gas from anode chamber 3, and an outlet port for generated hydrogen gas from cathode chamber 4, and HF introducing port 25 of HF feed line 24 to feed HF, and pressure gauges 7, 8 to detect the pressure inside of the anode chamber 3 and the cathode chamber 4 respectively, are disposed to the upper lid 17 on the electrolytic cell 1.

Also, as shown in Fig. 5, almost at the center of the upper lid 17, an opening part 35 is formed to insert the anode 5 into the electrolytic cell body 1a, and a cover body 36 is disposed to cover the opening part 35. A connecting rod 37 to which anode 5 is attached is provided perpendicularly to this cover 36. L-shaped cross section attachment 38 is provided at the lower end of connecting rod 37, to which upper part of anode 5 is attached by connecting bolt 39 penetrating through holes (not shown) of the upper part of the anode 5.

The above-mentioned electric insulating material 9a and O ring 10a as same as electric insulating material 9 and gas sealing material 10 are disposed between this cover body 36 and the upper lid 17. Thus, by placing the electric insulating material 9a and O ring 10a between cover body 36 and upper lid 17, gas such as fluorine gas and hydrogen fluoride gas in the electrolytic cell 1 do not leak out of and permeation of the air into the electrolytic cell 1 can be prevented. Also, the cover body 36, which surface is being applied by an insulation paint, and electrical connecting part (terminal stand) which is covered with the resin material of electric insulation, which prevents short- circuiting with outside.

The gas outlet ports 22, 23 disposed on the upper lid 17 have tubes which are formed of the material having the corrosion resistance against the fluorine gas, such as stainless steel or the like. Also, the HF feed line 24 is covered with a thermo controlling heater (secondary heat exchanging means) 24a to prevent the HF from liquefaction.

The heat exchanging means 13 shown in Fig. 2 is constructed with the warm water jacket 51 disposed surrounding the electrolytic cell 1 and heating parts (secondary heat exchanging means) 52 disposed on the bottom of electrolytic cell 1.

This warm water jacket 51 disposed surrounding the electrolytic cell 1 comprises a warm water pipe (first heat exchanging means) 53 which has a stream line 53a (referred to as Fig.3) which can flow a heat medium, and a vacuum insulating zone 55 formed inside of an outer flame 54 having a sealed warm water pipe 53, and surrounding with space furthermore to the warm water pipe 53.

The warm water pipe 53 is disposed surrounding the side of electrolytic cell 1 horizontally and at the fixed interval, and connects each other at the connection part (not shown) and connected. Also, as the material of the warm pipe 53, material having an excellent thermal conductivity like copper is preferable, but it is not limited, metal pipe, such as iron, stainless steel, aluminum or the like can be applied, for example.

As shown in Fig.2, as the shape of this warm water pipe 53, rectangular pipe is preferable. When the shape is rectangular cross-section, contact area with the side of electrolytic cell 1 can be made larger. As the result, the thermal energy of thermal medium can be conducted for the electrolytic cell 1 effectively, but the shape is not limited. A circle pipe, a triangular pipe, a semicircular pipe by cutting half with the surface which goes through the main axis in the circle pipe can be applied, for example. Namely, if the pipe is semi-circular, by disposing the semi-circular pipe side of the electrolytic cell 1, the aisle, which includes the surrounding of the electrolytic cell 1 can be formed between semi-circular pipe and surrounding of the electrolytic cell 1. The heat medium hereafter mentioned flows in this aisle and serves as same as the warm water pipe 53.

Also, the warm water pipe 53, which is equipped along the longitudinal direction and generally by welding having a welding part side of the electrolytic cell 1 and the sealing material having a high thermal conductivity is placed between two welding parts along with the longitudinal direction of the warm water pipe 53. Thus, by placing the sealing material, the contact area between warm water pipe 53 and the side of electrolytic cell 1 can be made larger and the efficiency of thermal conductivity from the warm water pipe 53 can be improved.

Further, the semi-circular pipe can be also attached surrounding the electrolytic cell 1 along the longitudinal direction regularly, by welding having a welding part. By filling up the sealing material between two welding parts, the leakage of the heat medium from the aisle can be prevented and the heat energy of the heat medium transmitted to the semicircle pipe can be transmitted to the electrolytic cell 1 by placing the sealing material like said warm water pipe 53.

Also, heated heat medium with the warm water heating apparatus 12 shown in Fig. 2 is being circulated in the aisle of warm water pipe 53. This heat medium is consisted of pure water, and the warm water 56 heated at the warm water by heating apparatus is being circulated in the arrowed direction shown in Fig. 2.

Since the heat medium is being circuited in the aisle 53a of the warm water pipe 53 of the first heat exchanging means, the first heat exchanging means can be cleaned and sealed. Also, by using the pure water for heat medium, electrolytic cell body 1a which protects cathodically, shown in the following and the heat medium are insulated electrically, and electrical short-circuiting between electrolytic cell body 1a and heat medium can be prevented. Since the pure water does not contain the impurity and almost dose not flow the electricity. As the result, the electric current is not conducted from the warm water apparatus 12 by using the pure water, the generation of the electrical leakage between electrolytic cell body 1a and heat medium such as pure water can be mostly prevented.

In addition, the pipe from the warm water heating apparatus 12 connecting with warm water pipe 53 can be insulated electrically current by using the pipe which is insulating material itself or connection with the insulating material between two pipes. Also, in the preferred embodiment, as the pipe, polytetrafluoroetylene (PTFE) hose is adopted. Further, the electric insulation resistance becomes increasing, as the length of tube is getting longer, so the length between warm water apparatus 12 and electrolytic cell 1 is 10 centi meters or more is preferable, 30 centi meters is more preferable.

Further, check valve is disposed in the outer flame 54(not shown), vacuum insulating zone 55 is formed to be decompression or vacuum insulating layer by vacuuming the air with decompression machine or the like shown in Fig.1 from the vacuum insulating zone 55 which is formed between outer flame 54 and warm water pipe 53. As the result, the heat generated by flowing the heat medium to the aisle 53a in the warm water pipe 53 almost cannot be emitted to the outside, and the electrolytic cell 1 is heated effectively by warm water pipe 53 contacted with electrolytic cell 1. Since the vacuum insulation zone 55 is decompression or vacuum, the particles from the insulating layer to be one of the factors is not be generated in the process for manufacturing semiconductor. Therefore, it is possible to use the generator on-site in the process for manufacturing semiconductor. Also, the warm water pipe 53 is being surrounded by outer flame 54, the temperature of the atmosphere surrounding of the electrolytic cell 1 is not only being raised but also kept clean. Therefore, as it is possible to prevent the workers from burning or the like, as the result, security is improved.

A heating part 52 which is consisted of a rubber insulating layer 52a disposed on the bottom of electrolytic cell body 1, and a heating layer 52b which has a nichrome wire disposed all faces inside, and laminated and shaped plate like. The bottom of the electrolytic cell 1 is heated by the heating part 52, which is applied the electric power from an electric power source (not shown) and via insulating layer 52a. Accordingly, a heat emission from the bottom of electrolytic cell 1 is prevented by heat parts 52. Also, as the shape of the heat part52 is plate like, the bottom surface of electrolytic cell 1 is placed stably.

Further, the warm water heating apparatus 12 which supplies the warm water heated the pure water to the warm jacket 51 comprises, a heat medium heating means (not shown) in the warm water jacket 51 and thermo controlling apparatus (not shown) which controls the heat medium heating means. Furthermore, warm water heating apparatus 12, which is connected with thermometer 11 which measures temperature of the electrolytic bath 2 in the electrolytic cell 1, and warm water jacket 51 which heats the electrolytic bath 2 in the electrolytic cell 1, and provides warm water 56 into the warm water jacket 51 to maintain the temperature of the electrolytic cell 1 based on the thermal information of thermometer 11. Further, by providing the pressure controlling function to the warm water heating apparatus 12, the tube can be connected with warm water heating apparatus 12, warm water pipe 53 and other tubes in the sealed condition. By heating the warm water, from the warm water pipe 53 sealed and connected to warm water heating apparatus, in the case of the pressure rising in the tube (warm water pipe) this pressure is eased by warm water heating apparatus 12. Also, in the case of cooling the warm water, the pressure of warm water pipe is dropped, in this case, the pressure is compensated by warm water heating apparatus 12. By providing the function like this, without decreasing warm water due to the vaporization of warm water at the time of heating, and the permeation of the air or the like can be prevented by decompressing in the tube at the time of the cooling. By this construction, it is not necessary to compensate with warm water or the like, the contamination from the substance outside can be prevented. As the result, the corrosion of the warm water pipe 53 or the like can be prevented.

Thus, as the warm water jacket 51 which has the decompression or vacuum thermally heat insulating structure, the coefficient of thermal conductivity of the insulation zone is extremely minimized than insulation zone which is made of the material such as asbestos, urethane or the like, the thickness of the insulating zone 55 itself can be thinned. Therefore, the electrolytic apparatus can be compacted, and the security is improved, further a loss of heating energy can be reduced. Also, generating of the particles from insulating material is prevented.

The electrolytic cell 1 described above is contained in the box 60 with upper open shown in Fig. 1. This box 60 has a bottom plate 61 which is slightly larger rectangle shape than the bottom of electrolytic cell 1, and four side plates 62 which are slightly larger rectangle shape than the side of electrolytic cell 1, and the connection part between bottom plate 61 and 4 side plates 62 sealing material is being placed from inside. Since the sealing material is provided in this connection part, the water leakage from the box 60 can be prevented.

The material or the shape of the box 60 is not limited specifically, but it is necessary to contain the electrolytic cell body 1a and to prevent the spread warm water jacket 51 or the connection part between the pipe from warm water heat apparatus 12 and warm water jacket 51 from the leakage of warm water. By this construction, the leakage to the outside of the heat medium such as the pure water heated (warm water 56) or the like from warm water pipe 53 can be prevented.

Next, the operation for the fluorine gas generator, which preferable embodiment is explained. By applying the voltage between the anode 5 and the cathode 6 in the electrolytic cell 1, the fluorine gas is generated from anode 5, and hydrogen gas is generated from cathode 6, under the normal conditions. The fluorine gas generated from anode 5 is supplied to the line from the fluorine gas outlet port 22 of the upper part of the anode chamber. Also, the hydrogen gas generated from cathode 6 is supplied to the line from the hydrogen gas outlet port 22 of the upper part of the anode chamber.

And, as the decreasing of the electrolytic bath 2 by means of continuous electrolyzing, liquid surface level detective means (not shown) is operated and by this linkage HF is supplied to the electrolytic bath 2 from HF supply line 24 via HF outlet port 25. Thus, as the HF decreasing such as the material for electrolyzing depends on by electrolysing between the anode 5 and the cathode 6 in the electrolytic bath 2, HF is introduced to the electrolytic bath 2 continuously and HF concentration in the Electrolytic bath 2 is being kept at the optimal condition. As the result, the condition of electrolyzing is always stabilized.

Also, to carry out the electrolysis with electrolytic bath 2 efficiently, electrolytic bath 2 is heated to an optimal temperature by heat exchanging means 3 via electrolytic cell 1. The electrolytic bath 2 is kept at the optimal temperature by the thermometer 11 to monitor the temperature in the electrolytic bath 2, and warm water heating apparatus 12 to heat the pure water supplying to the warm water jacket 51, and a plate like heating part.

Also, as the warm water jacket 51 which has the decompression or vacuum zone 55 due to the outlet 54, as the result, the heat energy generated can be connected (heated) efficiently, via the surrounding outside of the electrolytic cell 1 and temperature rise of the warm water jacket surrounding outside can be prevented. Accordingly, the aggravation of the atmosphere surrounding of the heat exchanging means 13 is not only prevented, but also the energy loss of the heat exchanging means 13 can be prevented, and the electrolytic bath is kept at an optimal temperature, as the result, electrolysis can be carried out by anode 5 and cathode 6 efficiently, and fluorine gas can be generated stably.

In addition, although the electrolytic apparatus for molten salt accordance with the present invention is mainly explained fluorine gas generator to generate the fluorine gas by electrolyzing, the present invention is not limited to the fluorine gas generator. Even if the other electrolytic apparatus, when the usage of the concept relating to the present invention, it should be included in the present invention. Also, the warm water heating apparatus 12 to supply the warm water 56 to the warm water jacket 56 is not only heating heat exchanging medium (pure water), but also heating or cooling for heat exchanging medium is possible. By applying the warm water heating apparatus, the temperature adjustment of the electrolytic bath 2 in the electrolytic cell 1 can be carried out promptly.

The present invention relates to an electrolytic apparatus for molten salt having an electrolytic cell to electrolyze an electrolytic bath consists of a mixed molten salt comprises a first heat exchanging means to heat and/or cool the electrolytic cell body, and an outer flame disposed outside of the first heat exchanging means with space and to seal the first exchanging means, and a heat insulating zone capable of decompression or vacuum formed inside the outer flame. Further, an electric insulating material and a gas sealing material which are placed in the electrolytic cell required the electric insulating and the gas sealing simultaneously.

## Claims

1. An electrolytic apparatus for molten salt disposed on an electrolytic cell to electrolyze an electrolytic bath consisting of a mixed molten salt comprises:
a first heat exchanging means to heat and/or cool an electrolytic cell body, and
an outer flame which is sealed and disposed further surrounding outside of the first heat exchanging means with space, and
a decompression or a vacuum insulating zone which is formed in the outer flame.

2. An electrolytic apparatus for molten salt according to claim 1, wherein the electrolytic cell having a secondary heat exchanging means to heat the electrolytic cell body.

3. An electrolytic apparatus for molten salt disposed on an electrolytic cell to electrolyze an electrolytic bath consisting of the mixed molten salt comprises:
a first heat exchanging means to heat and/or cool an electrolytic cell body, and an electric insulating material and a gas sealing material which are disposed in the electrolytic cell required the electric insulation and the gas sealing simultaneously.

4. An electrolytic apparatus for molten salt disposed on an electrolytic cell to electrolyze an electrolytic bath consisting of the mixed molten salt according to claim 1,2, wherein the first heat exchanging means to heat and/or cool an electrolytic cell body, and the electric insulating material and the gas sealing material which are disposed in the electrolytic cell required the electric insulating and gas sealing simultaneously.

5. An electrolytic apparatus for molten salt according to claim 1 - 3, wherein the first heat exchanging means having a flowing line to flow a heat exchanging medium around the electrolytic cell.

6. An electrolytic apparatus for molten salt according to claim 5, wherein the heat exchanging means is a highly electric insulating fluid.

7. An electrolytic apparatus for molten salt according to claim 1 - 3, 6, wherein the electrolytic cell is disposed in the box which upper part is opened.

8. An electrolytic apparatus for molten salt according to claim 1 - 3, 6, wherein the mixed molten salt comprises a hydrogen fluoride.
